# EUROPEAN PATENT APPLICATION

(11) **EP 1 745 835 A1**
(43) Date of publication of application: **24.01.2007**
(21) Application number: 06253723.8
(22) Date of filing: 17.07.2006
(51) Int. Cl.: B01D 53/22, B01D 71/68, B60S 5/04

(54) **Fluid distribution system and method of operating the same**

(30) Priority: 18.07.2005 US 183466
(71) Applicant: INGERSOLL-RAND COMPANY, Montvale, NJ 07645 (US)
(72) Inventor: Dohenry, Edward L.D., Cornelius, NC 28031 (US); Towner, Joseph L., Mooresville, NC 28117 (US)
(74) Representative: Holmes, Matthew Peter

(57) **Abstract**

A fluid distribution system includes a flexible conduit having an inlet and an outlet and a filter positioned within the conduit between the inlet and the outlet. The filter is operable to separate air flowing through the conduit into nitrogen and permeate and to deliver the nitrogen to the outlet of the conduit. The filter is flexible for flexing movement with the conduit.

## Description

### FIELD OF THE INVENTION

The present invention relates to fluid distribution systems and methods of operating the same.

### SUMMARY

In one embodiment, the invention provides a fluid distribution system including a compressor operable to produce compressed air, a conduit having an inlet, an outlet, and a length measured between the inlet and the outlet, the inlet being connectable to the compressor to receive the compressed air, and a filter within the conduit. In some embodiments, the filter separates nitrogen from substantially all other elements in the compressed air, directs the separated nitrogen toward the outlet, and directs the other elements to be exhausted through a portion of the length of the conduit between the inlet and outlet.

The invention also provides a fluid distribution system including a flexible conduit having an inlet and an outlet and a filter positioned within the conduit between the inlet and the outlet. In some embodiments, the filter is operable to separate air flowing through the conduit into nitrogen and permeate and to deliver the nitrogen to the outlet of the conduit. The filter is flexible for flexing movement with the conduit

In another embodiment the invention provides a method of operating a fluid distribution system to separate nitrogen, from air. The fluid distribution system can include a compressor, a flexible conduit having an inlet, an outlet, and a wall extending between the inlet and the outlet, and a filter supported in the conduit. In some embodiments, the method comprises the acts of compressing air in the compressor, connecting the inlet to the compressor, directing the compressed air from the compressor through the inlet and into the conduit, separating the nitrogen from the compressed air and forming permeate as the compressed air travels through the conduit, and directing the permeate outwardly through the conduit wall.

Other aspects of the invention will become apparent by consideration of the detailed description and accompanying drawings.

### BRIEF DESCRIPTION OF THE DRAWINGS

Fig. 1 is a partial schematic drawing illustrating a fluid distribution system, with a portion cut away for the purpose of illustration, according to some embodiments of the present invention.
Fig. 2 is a perspective view of a portion of the fluid distribution system, with a portion cut away for the purpose of illustration.
Fig. 3 is a cross-section view of a portion of the fluid distribution system taken along line 3―3 of Fig. 2.
Fig. is an enlarged view of a portion of the fluid distribution system encircled with line 4―4 in Fig. 3.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including", "comprising", or "having" and variations thereof herein is meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings. Further, "connected" and "coupled" are not restricted to physical or mechanical connections or couplings.

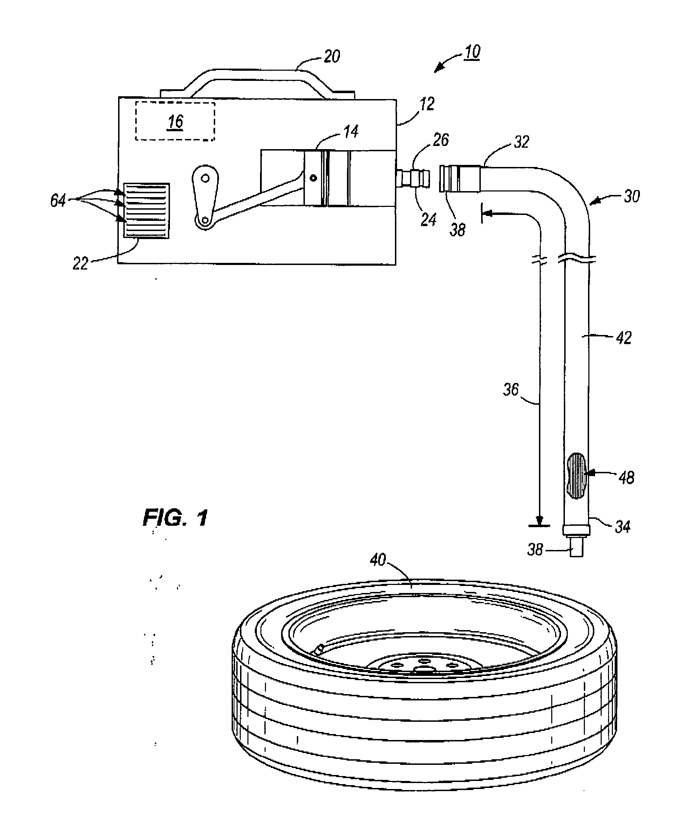

Fig. 1 illustrates a fluid distribution system 10 including a frame 12, which supports an air compressor 14 and a prime mover 16, such as, for example, an internal combustion engine, an electric motor, and the like. In some embodiments, the fluid distribution system 10 can be relatively small and can be handheld to facilitate transportation between locations. For example, in the illustrated embodiment of Fig. 1, the fluid distribution system 10 weighs less than 20 pounds, has a volume of approximately 0.4 ft³, and includes a handle 20 so that an operator can more easily carry the compressor 14 and the prime mover 16 with one hand.

In the illustrated embodiment of Fig. 1, the compressor 14 includes air intakes 22, which draw atmospheric air into the air compressor 14, and one or more air outlets 24, which expel or exhaust compressed air from the air compressor 14. In some embodiments, the air outlets 24 include couplings or nozzles 26 for fluidly connecting a hose or another conduit to the air compressor 14.

With continued reference to Fig. 1, the fluid distribution system 10 also includes a conduit 30 having a first or inlet end 32, a second or outlet end 34, and a length 36 measured between the inlet and the outlet ends 32, 34. The conduit 30 can also include couplings or nozzles 38 for connecting the inlet end 32 of the conduit 30 to one of the air outlets 24 and/or for connecting the outlet end 34 to one or more receptacles 40 (e.g., vehicle tires).

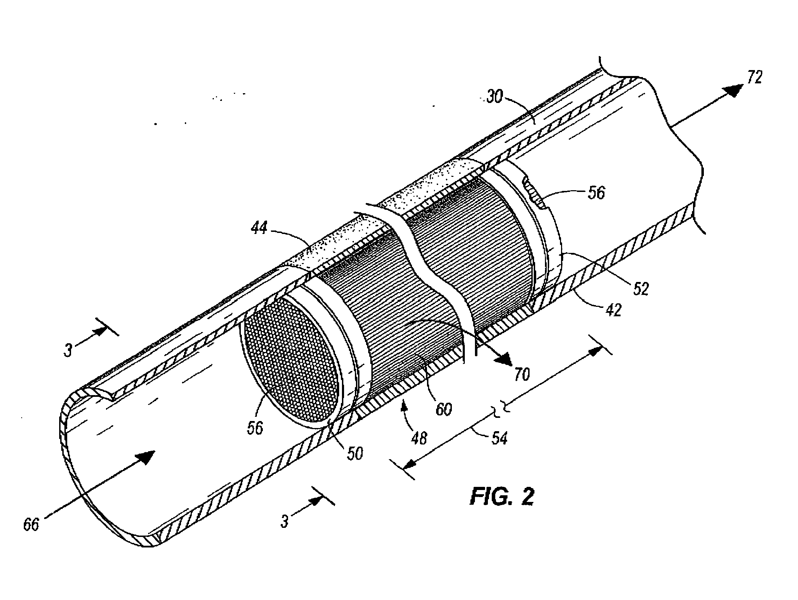

In some embodiments, such as the illustrated embodiment of Fig. 1, the conduit 30 is flexible and can be wound or cailed around a reel, a spool, or another carrying or storage apparatus. With additional reference to Fig. 2, the conduit 30 can include an outer wall 42, at least a portion of which can be formed of a fluid permeable material, such as, for example, a mesh material (e.g., a wire mesh material) or a woven material having a number of openings 44. In embodiments having a flexible conduit 30, the outer wall 42 can be formed of braided stainless steel and can have a bend radius of between about 6 inches and about 15 inches. In other embodiments, the flexible conduit 30 can be formed of other flexible materials and can have a bend radius of between about 8 inches and about 11 inches.

As shown in Figs. 1 and 2, the fluid distribution system 10 also includes a filter 48 positioned within the conduit 30 and having an inlet end 50 and an outlet end 52. The filter 48 is flexible for flexing movement with the conduit 30. In some embodiments, the filter 48 extends along at least one-quarter of the length 36 of the conduit 30. In other embodiments, the filter 48 can have other lengths relative to the conduit 30 and can extend along one-third, one-half, or more of the length 36 of the conduit 30.

More particularly, in some embodiments, the filter 48 can have a length 54 measured between the inlet and outlet ends 50, 52 of approximately forty inches and the conduit 30 can have a length 36 measured between the inlet and outlet ends 32, 34 of approximately forty-four inches. In other embodiments, the filter 48 can have a length 54 of between about twenty inches and about seventy-two inches and the conduit 30 can have a length 36 of between about twenty-four inches and about ninety-six inches.

In the illustrated embodiment of Figs. 2-4, the filter 48 includes a number of elongated hollow fiber membranes 60 formed of polysulfone extending axially through the conduit 30 between inlet and outlet seals 56. In the illustrated embodiment, the elongated hollow fiber membranes 60 have a length of approximately forty inches and are selectively permeable to separate compressed air (represented by arrow 66 in Fig. 2) into a filtrate (represented by arrow 72 in Fig. 2), which is retained and delivered to the outlet end 34 of the conduit 30, and permeate (represented by arrow 70 in Fig. 2), which is permitted to pass through the outer wall 42 of the conduit 30.

In the illustrated embodiment of Figs. 1-4, the elongated filter 48 is selectively permeable to nitrogen, the filtrate 72 is relatively pure nitrogen, which is substantially free of other fluids, and the permeate 70 includes oxygen, carbon dioxide, water vapor, and other gases separated from the compressed air 66. Nitrogen is relatively inert and is useful to fill tires because nitrogen does not corrode the rims of the tires.

In other embodiments, other filters 48, such as, for example, filters having cellulose derivatives, polyamides, polysulfones, and polystyrenes or blends thereof and filters having composite, asymmetric, or dense film products can also or alternately be used to separate at least one fluid component (e.g., nitrogen or another filtrate) from a mixture of fluids or a solution (e.g., atmospheric air) as the mixture travels through the conduit 30 between the compressor 14 and a receptacle 40.

With reference to the illustrated embodiment of Figs. 2-4, the filter 48 operates either on a screening principle (in which only molecules of certain size and/or shape are permitted to pass through) or a chemical principle (in which certain molecules are drawn into or absorbed by the material of the elongated hollow fiber membranes 60).

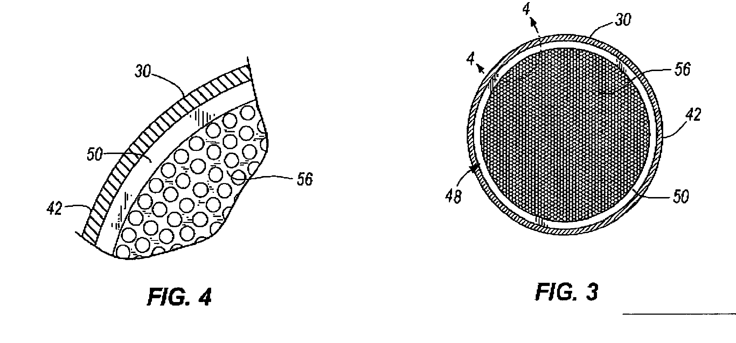

With reference to Figs. 2-4, the filter 48 also includes a seal 56 at each of the inlet and outlet ends 50, 52 and secured to the outer wall 42 of the conduit 30. The seals 56 block any space between the elongated hollow fiber membranes 60 so air on the inlet end 50 is forced into the elongated hollow fiber membranes 60. The seals 56 also prevent filtrate and permeate from flowing back into the spaces between the elongated hollow fiber membranes 60 after exiting the filter 48. Although Figs. 3 and 4 show only the inlet seal 56, the outlet seal 56 is substantially identical. The seals 56 may be made of a flexible material, such as, for example, epoxy resin.

In operation, the fluid distribution system 10 can be carried to a location adjacent to a receptacle 40. The inlet end 32 of the conduit 30 is then connected to the air compressor 14 and the outlet end 34 of the conduit 30 is connected to the receptacle 40. The operator then activates the air compressor 14, which draws atmospheric air 64 having a first pressure (e.g., approximately 15 psig) in through the air intakes 22 and compresses the air 64 in a conventional manner. The air compressor 14 then expels compressed air 66 having a second pressure (e.g., between about 90 psig and about 135 psig) through at least one of the air outlets 24 and into the conduit 30.

The compressed air 66 then travels through at least a portion of the conduit 30 from the inlet end 32 of the conduit 30 toward the filter 48. The compressed air 66 is forced into the elongated hollow fiber membranes 60 by the inlet seal 56. In the elongated hollow fiber membranes 60, permeate 70 is separated from filtrate 72.

In the illustrated embodiment of Fig. 2, the filtrate 72 is forced axially through the elongated hollow fiber membranes 60 toward the outlet 52 of the filter 48 while the permeate 70 is directed radially outwardly between the elongated hollow fiber membranes 60 and through the outer wall 42 of the conduit 32. In some embodiments, the permeate 70 is directed outwardly through the outer wall 42 of the conduit 30 to atmosphere along at least one-quarter of the length 36 of the conduit 30.

The filtrate 72 is directed out of the conduit 30 into a receptacle 40. The outlet seal 56 prevents filtrate 72 from flowing back into the space between the elongated hollow fiber membranes 60 and prevents permeate 70 from reentering the flow stream in the conduit downstream of the filter 48.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the spirit and scope of the present invention as set forth in the appended claims.

For example, while the illustrated embodiment includes a single filter 48 positioned along the conduit 30, in alternate embodiments of the present invention, two, three or more filters can be positioned along the conduit 30 in a parallel or series arrangement to increase capacity and/or improve separation.

## Claims

1. A fluid distribution system comprising:
a compressor operable to produce compressed air;
a conduit having an inlet, an outlet, and a length measured between the inlet and the outlet, the inlet being connectable to the compressor to receive the compressed air; and
a filter within the conduit;
wherein the filter separates nitrogen from substantially all other elements in the compressed air, directs the separated nitrogen toward the outlet, and directs the other elements to be exhausted through a portion of the length of the conduit between the inlet and outlet.

2. The fluid distribution system of claim 1, wherein the conduit and filter are both flexible to facilitate coordinated flexing movement of the conduit and filter.

3. The fluid distribution system of claim 2, wherein the conduit has sufficient flexibility to be wound around a reel.

4. The fluid distribution system of claim 1, wherein the elements other than nitrogen are vented from the conduit to atmosphere along at least one-quarter of the length of the conduit.

5. The fluid distribution system of claim 1, wherein the filter includes a plurality of elongated filter membranes, the system further comprising a sealing member at the inlet, wherein the sealing member substantially prevents the compressed air to flow in between the plurality of elongated filter membranes and forces substantially all of the compressed air entering the conduit to flow into the plurality of elongated filter membranes.

6. The fluid distribution system of claim 1, wherein the filter includes a plurality of elongated filter membranes, the system further comprising a sealing member at the outlet, wherein the sealing member substantially prevents the nitrogen flowing out of the outlet end of the conduit to flow back into the outlet end in between the elongated filter membranes.

7. The fluid distribution system of claim 1, wherein the filter comprises a plurality of polysulfone elongated filter membranes, wherein the compressed air flows into the elongated filter membranes, and wherein the elements other than nitrogen diffuse through walls of the polysulfone elongated filter membranes as the compressed air flows along the length of the elongated filter membranes.

8. The fluid distribution system of claim 7, wherein the elongated filter membranes are at least twenty inches long.

9. The fluid distribution system of claim 1, wherein the inlet includes a first coupling adapted to receive the compressed air from the compressor, and wherein the outlet includes a second coupling adapted to deposit the nitrogen into a receptacle.

10. The fluid distribution system of claim 1, wherein the conduit has a bend radius of at least six inches.

11. A fluid distribution system comprising:
a flexible conduit having an inlet and an outlet; and
a filter positioned within the conduit between the inlet and the outlet, the filter being operable to separate air flowing through the conduit into nitrogen and permeate and to deliver the nitrogen to the outlet of the conduit, the filter being flexible for flexing movement with the conduit.

12. The fluid distribution system of claim 11, further comprising an air compressor operable to compress the air, and wherein the inlet of the conduit is connectable to the air compressor to receive the compressed air from the air compressor.

13. The fluid distribution system of claim 12, wherein the inlet includes a first coupling adapted to receive the compressed air from the compressor, and wherein the outlet includes a second coupling adapted to deposit the nitrogen into a receptacle.

14. The fluid distribution system of claim 11, wherein the conduit has a length measured between the inlet and the outlet, and wherein the permeate is vented from the conduit to atmosphere along at least a portion of the length of the conduit.

15. The fluid distribution system of claim 11, wherein the filter comprises a plurality of polysulfone elongated filter membranes, wherein the air flows into the elongated filter membranes, and wherein permeate diffuses through walls of the polysulfone elongated filter membranes as the air flows along the length of the elongated filter membranes.

16. The fluid distribution system of claim 11, wherein the conduit includes a wall formed of a mesh material having a plurality of openings positioned between the inlet and the outlet, and wherein the plurality of openings facilitates venting of the permeate through the conduit between the inlet and the outlet.

17. The fluid distribution system of claim 11, wherein the filter includes a. plurality of elongated filter membranes, the system further comprising a sealing member at the outlet, wherein the sealing member substantially prevents the nitrogen flowing out of the outlet end of the conduit to flow back into the outlet end in between the elongated filter membranes.

18. The fluid distribution system of claim 11, wherein the filter includes a plurality of elongated filter membranes, the system further comprising a sealing member at the inlet, wherein the sealing member substantially prevents the air to flow in between the plurality of elongated filter membranes and forces substantially all of the air entering the conduit to flow into the plurality of elongated filter membranes.

19. The fluid distribution system of claim 11, wherein the conduit has a bend radius of less than fifteen inches.

20. A method of operating a fluid distribution system to separate nitrogen from air, the fluid distribution system including a compressor, a flexible conduit having an inlet, an outlet, and a wall extending between the inlet and the outlet, and a filter supported in the conduit, the method comprising the acts of:
compressing air in the compressor;
connecting the inlet to the compressor;
directing the compressed air from the compressor through the inlet and into the conduit;
separating the nitrogen from the compressed air and forming permeate as the compressed air travels through the conduit; and
directing the permeate outwardly through the conduit wall.
